(19) Europäisches Patentamt
European Patent Office
Office européen des brevets

(11) **EP 1 727 124 B1**

(12) **FASCICULE DE BREVET EUROPEEN**

(45) Date de publication et mention
de la délivrance du brevet:
**11.03.2020 Bulletin 2020/11**

(51) Int Cl.:
***G10K 11/16*** *(2006.01)* ***B60H 1/00*** *(2006.01)*

(21) Numéro de dépôt: **06007201.4**

(22) Date de dépôt: **05.04.2006**

(54) **Procédé de régulation du confort acoustique d'une installation**

Verfahren zur Regulierung des akustischen Komforts einer Anlage

Method for regulating the acoustic comfort of an installation

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **27.05.2005 FR 0505348**

(43) Date de publication de la demande:
**29.11.2006 Bulletin 2006/48**

(73) Titulaire: **VALEO SYSTEMES THERMIQUES**
**78321 Le Mesnil St Denis Cedex (FR)**

(72) Inventeurs:
• **Roy, David**
**75018 Paris (FR)**
• **Naji, Said**
**78990 Elancourt (FR)**
• **Duputel, Patrick**
**95240 Cormelles en Parisis (FR)**

(56) Documents cités:
WO-A-03/055707      DE-C1- 19 944 735
FR-A- 2 727 502      US-A- 5 045 765
US-A1- 2004 076 302

**Description**

L'invention concerne un procédé de régulation du confort acoustique d'une installation, en particulier d'une installation de chauffage, ventilation et/ou climatisation d'un véhicule automobile.

De tels procédés permettent de réduire les gênes acoustiques des installations de type installation de chauffage, ventilation et/ou climatisation.

Dans les procédés connus, on réduit les pertes de charge des installations, afin d'éviter les turbulences aérauliques et limiter la vitesse de rotation du pulseur.

Cependant, avec la réduction de l'encombrement sans cesse demandée par les constructeurs automobiles, les solutions connues atteignent des limites physiques. En effet, il devient de plus en plus difficile d'accepter des débits d'air élevés (600 Kg/h) pour des encombrements réduits (< 30 l).

D'autres procédés utilisent l'ajout d'un matériau acoustiquement absorbant.

Le document DE 199 44 735 décrit un procédé de régulation du confort acoustique d'une installation en particulier d'une installation de chauffage, ventilation et/ou climatisation d'un véhicule automobile selon l'art antérieur.

Cependant ce type de procédé reste très coûteux.

Un but de l'invention est de fournir un procédé de régulation du confort acoustique d'une installation selon la revendication 1 et une installation apte à être régulée par le procédé selon la revendication 17 qui évitent les inconvénients précités.

Ce but de l'invention est atteint par le fait qu'on mesure une sonie SZp et un degré d'interférence du bruit de fond SInt du niveau sonore d'un habitacle dans lequel l'installation est au moins en partie agencée, et par le fait qu'on détermine un facteur de préférence acoustique Pfa en fonction de ladite sonie et dudit degré d'interférence du bruit de fond dudit habitacle.

La sonie d'un son (ou intensité perçue) est liée à sa pression acoustique. Cependant, à pression acoustique égale, les sons à basse ou haute fréquence ont une sonie inférieure aux sons à fréquence moyenne. Ainsi, pour paraître aussi intense qu'un son de 1 000 Hz à 43 dB, un son de 100 Hz ou de 10 000 Hz, doit avoir un niveau de 63 dB. Dans ce cas, les trois sons ont un même niveau de sonie de 43 phones ; le phone étant l'unité servant à exprimer le niveau de sonie. La durée a également un impact sur la sonie. En effet, pour les sons ayant une durée inférieure à une seconde, la sonie augmente avec la durée des sons. Par ailleurs, on sait que chaque augmentation de 10 dB a pour effet de doubler la sonie.

Le degré d'interférence du bruit de fond du niveau sonore est un critère très important pour la compréhension humaine et pour toute application qui nécessite une bonne intelligibilité puisqu'il correspond à la mesure de la difficulté à percevoir un son dans un bruit de fond.

Selon la présente invention, le procédé de régulation du confort acoustique d'une installation, en particulier d'une installation de chauffage, ventilation et/ou climatisation d'un véhicule automobile comprend des moyens de détermination d'une sonie SZp et d'un degré d'interférence du bruit de fond SInt du niveau sonore d'un habitacle dans lequel l'installation est au moins en partie agencée. Il détermine alors un facteur de préférence acoustique Pfa en fonction de la sonie et du degré d'interférence du bruit de fond de l'habitacle.

Selon une variante de réalisation, la sonie SZp et le degré d'interférence du bruit de fond SInt du niveau sonore de l'habitacle sont mesurés, de façon préférentielle par un microphone.

Selon un autre mode de réalisation, une mémoire regroupe un ensemble de données caractéristiques du niveau sonore de l'habitacle. Cette mémoire permet de déterminer la sonie SZp et le degré d'interférence du bruit de fond SInt du niveau sonore de l'habitacle.

La mémoire est paramétrée et/ou individualisée en fonction du véhicule (10) et/ou des modes d'utilisation possibles de l'installation. Elle permet de déterminer la préférence acoustique Pfa en fonction de la sonie SZp et du degré d'interférence du bruit de fond SInt de l'habitacle.

Le facteur de préférence acoustique Pfa est préférentiellement une fonction linéaire de la sonie SZp et du degré d'interférence du bruit de fond SInt du niveau sonore de l'habitacle.

Le facteur de préférence acoustique Pfa, la sonie SZp et le degré d'interférence du bruit de fond SInt sont reliés par des coefficients Aa, Ba et Ca, selon la relation :

$$Pfa = Aa \times SZp + Ba \times SInt + Ca.$$

Dans cette relation, les coefficients Aa, Ba et Ca peuvent être des constantes ou bien des variables. Dans ce dernier cas, les coefficients dépendent préférentiellement de paramètres de l'installation.

Les coefficients sont préférentiellement compris entre - 20 et + 20. De manière plus précise, le coefficient Aa est préférentiellement compris entre - 10 et + 10 et le coefficient Ba entre -15 et + 15.

Préférentiellement, la sonie SZp et le degré d'interférence du bruit de fond SInt sont dépendants de la pression acoustique ou de la fréquence du niveau sonore de l'installation, et le facteur de préférence acoustique Pfa est préférentiellement modifié en fonction de la pression acoustique ou respectivement de la fréquence du niveau sonore de l'installation.

Lorsque le facteur de préférence acoustique est modifié en fonction de la fréquence du niveau sonore, il est préférable que la modification soit réalisée par un filtre rejecteur de bande.

A cet effet, il peut être prévu que le filtre rejecteur a une fréquence d'application comprise entre 100 Hz et 1 000 Hz et une largeur de bande comprise entre 1 000 Hz et 2 000 Hz.

De manière particulièrement avantageuse, le filtre rejecteur de bande a une fréquence d'application sensiblement égale à 250 Hz et une largeur de bande sensiblement égale à 1 500 Hz.

En fait, dans cette bande de fréquences, une diminution minimale du niveau sonore apporte une amélioration notable de l'agrément du signal. On comprend dès lors, qu'en influençant à peine les paramètres de l'installation pour en réduire le bruit, l'utilisateur voit son confort acoustique nettement amélioré.

Afin de considérer outre le confort acoustique, le confort thermique de l'utilisateur, en particulier pour des installations de climatisation ou de chauffage, il est préférable de déterminer un facteur de préférence thermique de l'habitacle.

En fait, selon l'invention, le facteur de préférence acoustique Pfa et le facteur de préférence thermique Pft définissent préférentiellement un facteur de préférence globale Pfg et les facteurs de préférences acoustique, thermique et globale sont préférentiellement reliées par des coefficient At, Bt et Ct selon la relation :

$$Pfg = At \times Pfa + Bt \times Pfg + Ct.$$

L'invention concerne aussi une installation, en particulier de chauffage, ventilation et/ou climatisation d'un véhicule automobile, comprenant un procédé de régulation du confort acoustique tel que précité.

Cet effet, il peut être prévu que l'installation comprenne des composants spécifiques et des moyens de commandes desdits composants ; les moyens de commande étant préférentiellement pilotés par un algorithme de contrôle.

L'installation comporte en outre préférentiellement des moyens de commutation aptes à déclencher le procédé de régulation du confort acoustique. Ces moyens de commutation peuvent préférentiellement être actionnés automatiquement ou manuellement.

L'invention sera bien comprise et ses avantages apparaîtront mieux à la lecture de la description détaillée qui suit, de modes de réalisation de l'invention représentés à titre d'exemples non limitatifs.

La description se réfère aux dessins annexés sur lesquels :

- la figure 1 représente une vue schématique d'un véhicule équipé d'une installation selon l'invention,
- la figure 2 représente un schéma du procédé selon l'invention,
- la figure 3 représente un graphe illustrant le niveau acoustique avec et sans l'installation selon l'invention,
- la figure 4 représente un graphe illustrant le débit d'air avec et sans l'installation selon l'invention, et
- la figure 5 représente un graphe illustrant la température dans l'habitacle avec et sans l'installation selon l'invention
- la figure 6 représente un schéma du procédé selon une autre variante.

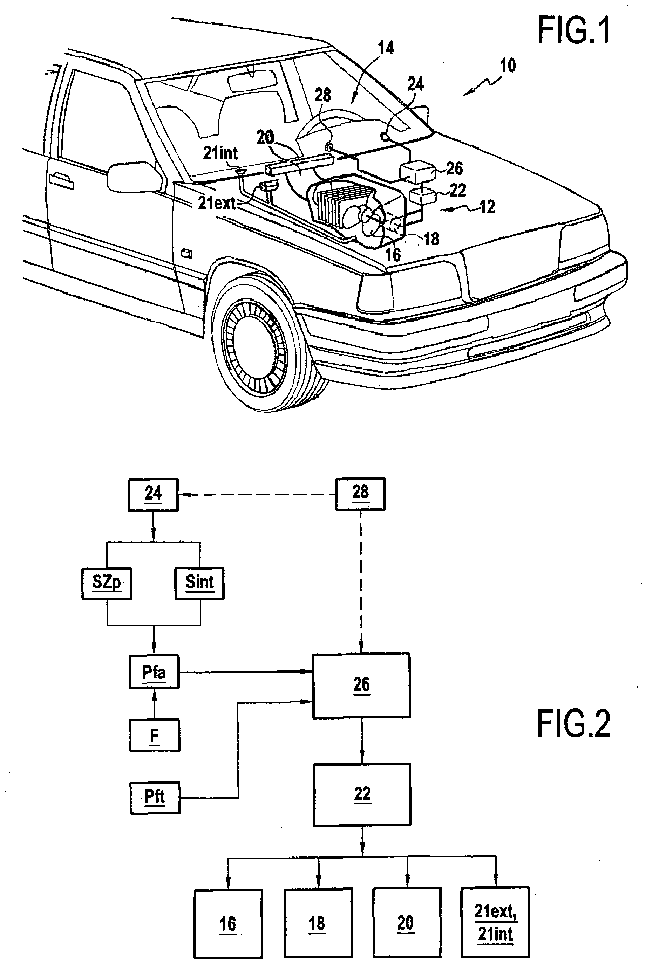

La figure 1 représente un véhicule 10 qui comporte une installation 12 selon l'invention, en l'espèce une installation de climatisation qui permet de réguler la température en soufflant de l'air froid au sein de l'habitacle 14 du véhicule 10. En fait, l'installation comporte des composants connus, en particulier un pulseur 16, un compresseur 18 et une distribution d'air 20 qui débouche en un ou plusieurs endroits dans l'habitacle 14 (au voisinage des pieds du conducteur, vers le centre de l'habitacle, vers le pare-brise, etc.). Par ailleurs, l'installation comporte des entrées d'air qui peuvent être effectuées par prélèvement de l'air extérieur à l'aide de moyens 21ext ou par des moyens 21int de recyclage de l'air confiné dans l'habitacle 14.

L'installation comporte en outre des moyens de commande 22 agencés dans l'habitacle 14, qui permettent de commander les composants spécifiques de l'installation, en particulier la vitesse de rotation du pulseur 16, la configuration de la distribution d'air 20 dans l'habitacle 14, en permettant le choix de la direction des pulsations de l'air froid, la configuration de l'entrée d'air, c'est-à-dire le choix entre le prélèvement de l'air extérieur 21ext ou le recyclage de l'air 21int, et la vitesse de rotation du compresseur 18.

Afin d'améliorer le confort acoustique de l'utilisateur installé dans l'habitacle 14, l'installation 12 est pilotée par un procédé de régulation du confort acoustique détaillé ci-après et illustré schématiquement sur la figure 2.

À cet effet, l'installation comporte au moins un microphone 24 disposé dans l'habitacle 14 pour mesurer le niveau sonore dans ce dernier. Il peut être prévu que l'installation comporte une pluralité de microphones judicieusement disposés dans l'habitacle, afin de mesurer en permanence le bruit engendré par l'installation en différents endroits de l'habitacle. Ainsi, on peut mesurer une sonie SZp et un degré d'interférence du bruit de fond du niveau sonore SInt de l'habitacle 14.

Dès lors que la sonie SZp et le degré d'interférence du bruit de fond du niveau sonore SInt de l'habitacle 14 ont été mesurés, il est possible de déterminer un facteur de préférence acoustique Pfa selon la relation suivante :

$$Pfa = Aa \times SZp + Ba \times SInt + Ca,$$

où Aa, Ba et Ca sont des coefficients acoustiques compris entre - 20 et + 20.

Dans cette relation, les coefficients Aa, Ba et Ca peuvent être des constantes ou bien des variables. Dans ce dernier cas, les coefficients dépendent préférentiellement de paramètres de l'installation.

Pour assurer un confort acoustique auprès des personnes qui se situent dans l'habitacle, il est préférable que le facteur de préférence acoustique soit compris entre 0,75 et 1.

La sonie SZp et le degré d'interférence du bruit de fond SInt dépendant de la pression acoustique ou respectivement de la fréquence du niveau sonore de l'installation, le facteur de préférence acoustique Pfa peut être modifié en fonction de la pression acoustique ou respectivement de la fréquence du niveau sonore de l'installation,

Lorsque le facteur de préférence acoustique Pfa est modifié en fonction de la fréquence du niveau sonore de l'installation, la modification est réalisée par un filtre rejecteur de bande F.

Le filtre rejecteur de bande F a en l'espèce une fréquence d'application de 250 Hz et une largeur de bande de 1 500 Hz.

Pour améliorer le confort acoustique, l'installation comporte en outre un algorithme de contrôle 26 permettant de piloter les moyens de commande 22 pour commander les composants spécifiques précités. L'algorithme de contrôle 26, dont le facteur de préférence acoustique Pfa est un paramètre d'entrée, présente une pluralité de sorties qui permettent ainsi de réguler les différents composants spécifiques de l'installation pour atteindre le confort acoustique souhaité.

L'installation comporte en outre des moyens de commutation 28 qui sont aptes à déclencher le procédé de régulation du confort acoustique.

À cet effet, les moyens de commutation peuvent être actionnés manuellement par l'utilisateur, ou bien selon une autre variante de l'invention, peuvent être actionnés automatiquement.

Le procédé peut en outre comporter une étape dans laquelle on détermine un facteur de préférence thermique Pft de l'habitacle 14 dans lequel est disposé installation, de manière à tenir compte de l'éventuelle dégradation du confort thermique lorsqu'on améliore le confort acoustique.

Afin de trouver un compromis entre la régulation du confort thermique et celle du confort acoustique, le procédé détermine un facteur de préférence globale Pfg selon la relation suivante, dans laquelle le facteur de préférence acoustique Pfa et le facteur de préférence thermique Pft sont reliées par des coefficients At, Bt et Ct qui sont préférentiellement compris entre - 3 et + 3 :

$$Pfg = At \times Pfa + Bt \times Pft + Ct.$$

De manière plus précise, les coefficients At et Bt sont préférentiellement compris entre - 1 et + 1.

La préférence thermique Pft est définie par la relation suivante :

$$Pft = A \times Tair + B \times Vair + C \times HR + D \times \Phi Solaire + E,$$

où Tair représente la température mesurée dans l'habitacle 14 à l'aide de moyens connus, par exemple une sonde thermique, Vair représente le volume de l'air, HR représente l'humidité relative et ΦSolaire représente le flux solaire, A, B, C, D et E sont des coefficients compris entre - 10 et + 10.

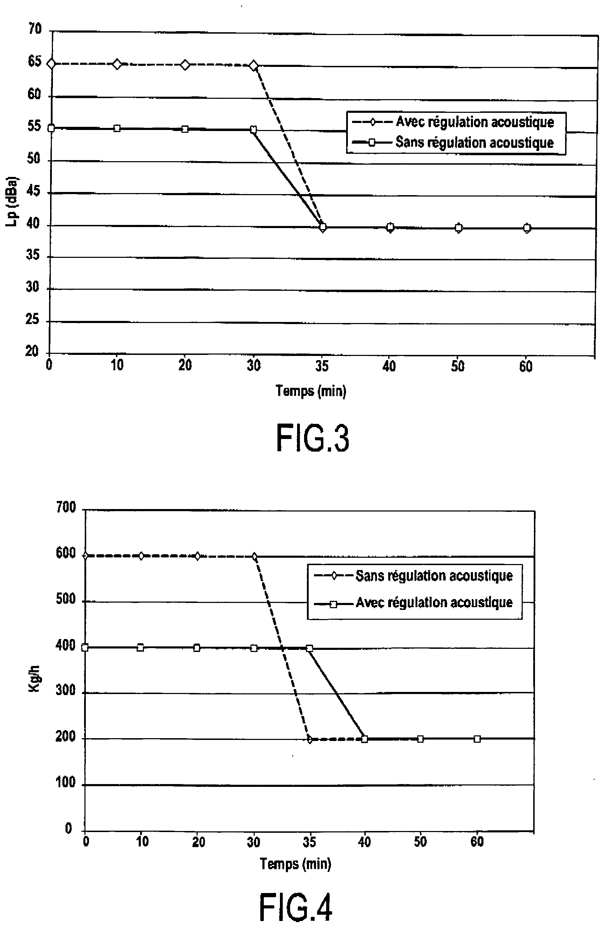

À titre d'exemple, lorsque le procédé régule le pulseur 16, un débit d'air inférieur de 200Kg/h a été relevé, entraînant une très légère dégradation du confort thermique et une très nette amélioration du confort acoustique. En effet, au niveau de la tête du conducteur, il a été constaté un niveau inférieur de 10dBa, comme illustré sur le graphe de la figure 3.

En outre, malgré cette très légère dégradation du confort thermique, le confort global est bien meilleur, du fait principalement de la très nette amélioration du confort acoustique.

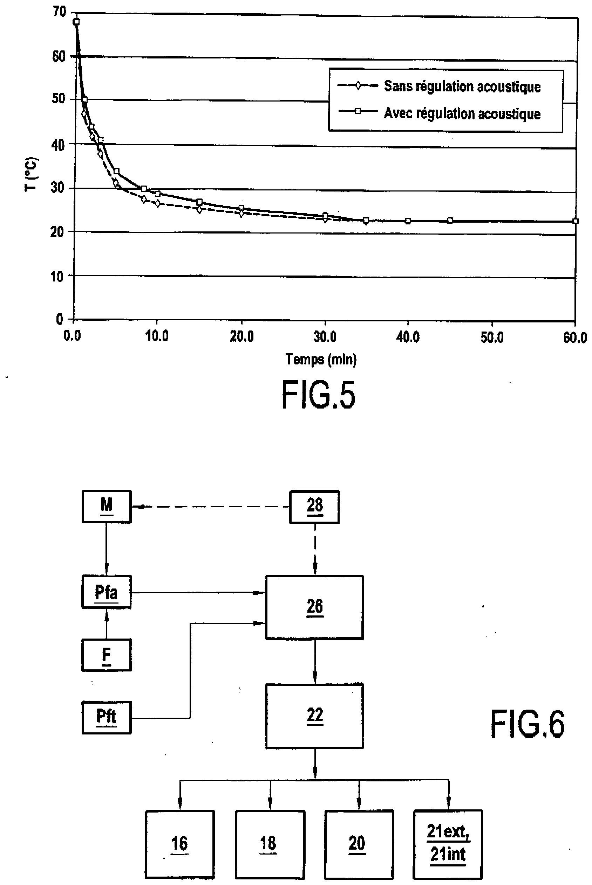

Selon un autre exemple illustré sur le graphe de la figure 4, en utilisant l'installation de l'invention, avec un débit de 400 Kg/h au lieu de 600 Kg/h, il est possible de maintenir une évolution de la température d'air au niveau de la tête sensiblement identique, que le procédé de régulation du confort acoustique soit enclenché ou non, comme illustré sur le graphe de la figure 5. En effet, la dégradation du confort thermique se traduit dans ce cas, par une augmentation de l'hétérogénéité de la température entre les pieds et le visage du conducteur.

Selon une autre variante illustrée schématiquement sur la figure 6, l'installation comporte une mémoire M regroupant un ensemble de données caractéristiques du niveau sonore de l'habitacle, en fonction des paramètres de l'installation. On comprend que cette mémoire M remplace le microphone 24 précité et la détermination de la sonie et du degré d'interférence du bruit de fond. Cette mémoire M est préalablement paramétrée et/ou individualisées en fonction par exemple du type de véhicule. En effet, les données de cette mémoire M dépendent préférentiellement du type de véhicule (marque, type, volume de l'habitacle) et du type d'installation, ainsi que des modes d'utilisation possible de l'installation (distribution d'air, entrées d'air, etc.). Les données de cette mémoire M permettent de déterminer la préférence acoustique qui constitue une des entrées pour l'algorithme de commande 26.

En fait, comme dans la variante précitée (avec microphone), les mêmes paramètres peuvent être modifiés de manière à faire correspondre aux besoins des passagers, à la fois le confort thermique et le confort acoustique, en influant les composants spécifiques de l'installation, tels que la vitesse de rotation du pulseur 16, la configuration de la distribution d'air 20 dans l'habitacle 14, en permettant le choix de la direction des pulsations de l'air froid, la configuration de l'entrée d'air, c'est-à-dire le choix entre le prélèvement de l'air extérieur 21ext ou le recyclage de l'air 21int, et la vitesse de rotation du compresseur 18.

Les procédés décrits précédemment font intervenir un microphone ou une mémoire afin de déterminer le facteur de préférence acoustique Pfa en fonction de la sonie SZp et du degré d'interférence du bruit de fond SInt et/ou d'un ensemble de données caractéristiques du niveau sonore de l'habitacle. Toutefois, le procédé peut faire intervenir tous moyens de détermination d'une sonie SZp et d'un degré d'interférence du bruit de fond SInt du niveau sonore et/ou d'un ensemble de données caractéristiques du niveau sonore de l'habitacle.

## Revendications

1. Procédé de régulation du confort acoustique d'une installation (12), en particulier d'une installation de chauffage, ventilation et/ou climatisation d'un véhicule automobile (10), procédé **caractérisé en ce que**

    - on détermine une sonie SZp et un degré d'interférence du bruit de fond SInt du niveau sonore d'un habitacle (14) dans lequel l'installation (12) est au moins en partie agencée, ladite sonie SZp étant dépendante d'une pression acoustique de ladite installation (12) et ledit degré d'interférence du bruit de fond SInt du niveau sonore d'un habitacle (14) correspondant à la mesure de la difficulté à percevoir un son dans un bruit de fond et
    - on détermine un facteur de préférence acoustique Pfa en fonction de la sonie SZp et du degré d'interférence du bruit de fond SInt de l'habitacle (14)

    et **en ce que** le facteur de préférence acoustique Pfa est une fonction linéaire de la sonie SZp et du degré d'interférence du bruit de fond SInt du niveau sonore de l'habitacle (14) et **en ce que** le facteur de préférence acoustique Pfa, la sonie SZp et le degré d'interférence du bruit de fond SInt sont reliés par des coefficients Aa, Ba et Ca, selon la relation :

    $$Pfa = Aa \times SZp + Ba \times SInt + Ca,$$

    Aa, Ba et Ca étant des coefficients acoustiques compris entre - 20 et + 20
    et **en ce que** on commande, grâce à un algorithme de contrôle (26) dont le facteur de préférence acoustique Pfa est un paramètre d'entrée, des moyens de commandes (22) de composants spécifiques (16, 18, 20, 21ext, 21int) de l'installation (12) pour atteindre le confort acoustique souhaité.

2. Procédé selon la revendication 1, **caractérisé en ce que** la sonie SZp et le degré d'interférence du bruit de fond SInt du niveau sonore de l'habitacle (14) sont mesurés.

3. Procédé selon la revendication 1, **caractérisé en ce que** la sonie SZp et le degré d'interférence du bruit de fond SInt du niveau sonore de l'habitacle (14) sont déterminés à partir d'un ensemble de données caractéristiques du niveau sonore de l'habitacle (14) regroupé dans une mémoire (M).

4. Procédé selon la revendication 3, **caractérisé en ce que** la mémoire (M) permet de déterminer la préférence

**EP 1 727 124 B1**

acoustique Pfa en fonction de la sonie SZp et du degré d'interférence du bruit de fond SInt de l'habitacle (14).

5. Procédé selon l'une des revendications précédentes, **caractérisé en ce que** les coefficients sont des constantes.

6. Procédé selon l'une des revendications 1 à 5, **caractérisé en ce que** les coefficients sont des variables dépendantes de paramètres de l'installation.

7. Procédé selon l'une quelconque des revendications 1 à 6, **caractérisé en ce que** le facteur de préférence acoustique Pfa est modifié en fonction de la pression acoustique du niveau sonore de l'installation.

8. Procédé selon l'une quelconque des revendications 1 à 6, **caractérisé en ce que** le facteur de préférence acoustique Pfa est modifié en fonction de la fréquence du niveau sonore de l'installation.

9. Procédé selon la revendication précédente, **caractérisé en ce que** la modification du facteur de préférence acoustique Pfa est réalisée par un filtre rejecteur de bande (F).

10. Procédé selon la revendication précédente, **caractérisé en ce que** le filtre rejecteur de bande (F) a une fréquence d'application comprise entre 100 Hz et 1 000 Hz.

11. Procédé selon la revendication 9 ou 10, **caractérisé en ce que** le filtre rejecteur de bande (F) a une largeur de bande comprise entre 1 000 Hz et 2 000 Hz.

12. Procédé selon la revendication 9, **caractérisé en ce que** le filtre rejecteur de bande (F) a une fréquence d'application égale à 250 Hz et une largeur de bande égale à 1 500 Hz.

13. Procédé selon l'une quelconque des revendications précédentes, **caractérisé en ce que** le facteur de préférence acoustique Pfa est compris entre 0,75 et 1.

14. Procédé selon l'une quelconque des revendications précédentes, **caractérisé en ce qu'**on détermine un facteur de préférence thermique Pft de l'habitacle (14).

15. Procédé selon la revendication 11, **caractérisé en ce que** le facteur de préférence acoustique Pfa et le facteur de préférence thermique Pft définissent un facteur de préférence globale Pfg et **en ce que** les facteurs de préférences acoustique Pfa, thermique Pft et globale Pfg sont reliés par des coefficient At, Bt et Ct selon la relation :

$$Pfg = At \times Pfa + Bt \times Pft + Ct.$$

16. Procédé selon la revendication 15, **caractérisé en ce que** les coefficients sont compris entre - 3 et + 3.

17. Installation, en particulier de chauffage, ventilation et/ou climatisation d'un véhicule automobile, comprenant un algorithme de contrôle (26), des composants spécifiques (16, 18, 20, 21ext, 21int) et des moyens de commandes (22) des composants spécifiques (16, 18, 20, 21ext, 21int) et en ce que les moyens de commande (22) sont pilotés par l'algorithme de contrôle (26) mettant en œuvre le procédé de régulation du confort acoustique selon l'une quelconque des revendications, le facteur de préférence acoustique Pfa étant un paramètre d'entrée de l'algorithme de contrôle (26) des moyens de commande (22).

18. Installation selon la revendication précédentes, **caractérisé en ce qu'**elle comporte en outre des moyens de commutation (28) aptes à déclencher le procédé de régulation du confort acoustique.

19. Installation selon la revendication 18, **caractérisé en ce que** les moyens de commutation (28) sont actionnés automatiquement.

20. Installation selon la revendication 18, **caractérisé en ce que** les moyens de commutation (28) sont actionnés manuellement.

21. Installation selon l'une quelconque des revendications 17 à 20, **caractérisé en ce que** l'algorithme de contrôle (26) des moyens de commande (22) comporte des sorties pour des paramètres de l'installation choisies parmi la vitesse de rotation d'un pulseur (16), la configuration d'une distribution d'air (20) dans l'habitacle (14), la configuration d'une entrée d'air (21ext, 21int) et la vitesse de rotation d'un compresseur (18).

22. Installation selon l'une quelconque des revendications 17 à 21, **caractérisé en ce qu'**elle comporte au moins un microphone (24) pour mesurer le niveau sonore de l'habitacle (14).

23. Installation selon l'une quelconque des revendications 17 à 21, **caractérisé en ce qu'**elle comporte une mémoire (M) regroupant un ensemble de caractéristiques du niveau sonore de l'habitacle (14) en fonction des paramètres de l'installation.

24. Installation selon la revendication 23, **caractérisé en ce que** la mémoire M est paramétrée et/ou individualisée en fonction du véhicule (10) et/ou des modes d'utilisation possibles de l'installation (12).

**Patentansprüche**

1. Verfahren zur Regelung des akustischen Komforts einer Anlage (12), insbesondere einer Heizungs-, Lüftungs- und/oder Klimatisierungsanlage eines Kraftfahrzeugs (10), wobei das Verfahren **dadurch gekennzeichnet ist, dass**:

   - eine Lautheit SZp und ein Störungsgrad des Hintergrundrauschens SInt des Geräuschpegels eines Fahrzeuginnenraums (14) bestimmt werden, in dem die Anlage (12) zumindest zum Teil angeordnet ist, wobei die Lautheit SZp von einem Schalldruck der Anlage (12) abhängt und der Störungsgrad des Hintergrundrauschens SInt des Geräuschpegels eines Fahrzeuginnenraums (14) dem Maß der Schwierigkeit entspricht, einen Ton in einem Hintergrundrauschen wahrzunehmen, und
   - ein Faktor akustischer Präferenz Pfa abhängig von der Lautheit SZp und vom Störungsgrad des Hintergrundrauschens SInt des Fahrzeuginnenraums (14) bestimmt wird, und

   dass der Faktor akustischer Präferenz Pfa eine lineare Funktion der Lautheit SZp und des Störungsgrads des Hintergrundrauschens SInt des Geräuschpegels des Fahrzeuginnenraums (14) ist, und dass der Faktor akustischer Präferenz Pfa, die Lautheit SZp und der Störungsgrad des Hintergrundrauschens SInt durch Koeffizienten Aa, Ba und Ca verbunden sind, gemäß der Gleichung:

$$Pfa = Aa \times SZp + Ba \times SInt + Ca,$$

   wobei Aa, Ba und Ca akustische Koeffizienten zwischen -20 und +20 sind,
   und dass abhängig vom Faktor akustischer Präferenz Pfa Steuereinrichtungen (22) von spezifischen Bauteilen (16, 18, 20, 21ext, 21int) der Anlage (12) gesteuert werden, um den gewünschten akustischen Komfort zu erreichen.

2. Verfahren nach Anspruch 1, **dadurch gekennzeichnet, dass** die Lautheit SZp und der Störungsgrad des Hintergrundrauschens SInt des Geräuschpegels des Fahrzeuginnenraums (14) gemessen werden.

3. Verfahren nach Anspruch 1, **dadurch gekennzeichnet, dass** die Lautheit SZp und der Störungsgrad des Hintergrundrauschens SInt des Geräuschpegels des Fahrzeuginnenraums (14) ausgehend von einer in einem Speicher (M) zusammengefassten Einheit von charakteristischen Daten des Geräuschpegels des Fahrzeuginnenraums (14) bestimmt werden.

4. Verfahren nach Anspruch 3, **dadurch gekennzeichnet, dass** der Speicher (M) es ermöglicht, die akustische Präferenz Pfa abhängig von der Lautheit SZp und vom Störungsgrad des Hintergrundrauschens SInt des Fahrzeuginnenraums (14) zu bestimmen.

5. Verfahren nach einem der vorhergehenden Ansprüche, **dadurch gekennzeichnet, dass** die Koeffizienten Konstanten sind.

6. Verfahren nach einem der Ansprüche 1 bis 5, **dadurch gekennzeichnet, dass** die Koeffizienten Variable sind, die von Parametern der Anlage abhängen.

7. Verfahren nach einem der Ansprüche 1 bis 6, **dadurch gekennzeichnet, dass** der Faktor akustischer Präferenz Pfa abhängig vom Schalldruck des Geräuschpegels der Anlage verändert wird.

8. Verfahren nach einem der Ansprüche 1 bis 6, **dadurch gekennzeichnet, dass** der Faktor akustischer Präferenz Pfa abhängig von der Frequenz des Geräuschpegels der Anlage verändert wird.

9. Verfahren nach dem vorhergehenden Anspruch, **dadurch gekennzeichnet, dass** die Änderung des Faktors akustischer Präferenz Pfa von einem Bandsperrfilter (F) durchgeführt wird.

10. Verfahren nach dem vorhergehenden Anspruch, **dadurch gekennzeichnet, dass** der Bandsperrfilter (F) eine Anwendungsfrequenz zwischen 100 Hz und 1 000 Hz hat.

11. Verfahren nach Anspruch 9 oder 10, **dadurch gekennzeichnet, dass** der Bandsperrfilter (F) eine Bandbreite zwischen 1 000 Hz und 2 000 Hz hat.

12. Verfahren nach Anspruch 9, **dadurch gekennzeichnet, dass** der Bandsperrfilter (F) eine Anwendungsfrequenz gleich 250 Hz und eine Bandbreite gleich 1 500 Hz hat.

13. Verfahren nach einem der vorhergehenden Ansprüche, **dadurch gekennzeichnet, dass** der Faktor akustischer Präferenz Pfa zwischen 0,75 und 1 liegt.

14. Verfahren nach einem der vorhergehenden Ansprüche, **dadurch gekennzeichnet, dass** ein Faktor thermischer Präferenz Pft des Fahrzeuginnenraums (14) bestimmt wird.

15. Verfahren nach Anspruch 11, **dadurch gekennzeichnet, dass** der Faktor akustischer Präferenz Pfa und der Faktor thermischer Präferenz Pft einen Faktor globaler Präferenz Pfg definieren, und dass die Faktoren akustischer Pfa, thermischer Pft und globaler Präferenzen Pfg durch Koeffizienten At, Bt und Ct gemäß der Beziehung verbunden sind:

$$Pfg = At \times Pfa + Bt \times Pft + Ct.$$

16. Verfahren nach Anspruch 15, **dadurch gekennzeichnet, dass** die Koeffizienten zwischen -3 und +3 liegen.

17. Anlage, insbesondere zur Heizung, Lüftung und/oder Klimatisierung eines Kraftfahrzeugs, die einen Regelalgorithmus, spezifische Bauteile (16, 18, 20, 21ext, 21int) und Steuereinrichtungen (22) der spezifischen Bauteile (16, 18, 20, 21ext, 21int) enthält, und dass die Steuereinrichtungen (22) durch den Regelalgorithmus (26) gesteuert werden, der das Verfahren zur Regelung des akustischen Komforts nach einem der Ansprüche durchführt, wobei der Faktor akustischer Präferenz Pfa ein Eingangsparameter des Regelalgorithmus (26) der Steuereinrichtungen (22) ist.

18. Anlage nach Anspruch 17, **dadurch gekennzeichnet, dass** sie außerdem Schalteinrichtungen (28) aufweist, die das Verfahren zur Regelung des akustischen Komforts auslösen können.

19. Anlage nach Anspruch 18, **dadurch gekennzeichnet, dass** die Schalteinrichtungen (28) automatisch Betätigt werden.

20. Anlage nach Anspruch 18, **dadurch gekennzeichnet, dass** die Schalteinrichtungen (28) manuell betätigt werden.

21. Anlage nach einem der Ansprüche 17 bis 20, **dadurch gekennzeichnet, dass** der Regelalgorithmus (26) der Steuereinrichtungen (22) Ausgänge für Parameter der Anlage aufweist, die unter der Drehgeschwindigkeit eines Gebläses (16), der Konfiguration einer Luftverteilung (20) im Fahrzeuginnenraum (14), der Konfiguration eines Lufteinlasses (21ext, 21int) und der Drehgeschwindigkeit eines Kompressors (18) ausgewählt werden.

22. Anlage nach einem der Ansprüche 17 bis 21, **dadurch gekennzeichnet, dass** sie mindestens ein Mikrofon (24) aufweist, um den Geräuschpegel des Fahrzeuginnenraums (14) zu messen.

23. Anlage nach einem der Ansprüche 17 bis 21, **dadurch gekennzeichnet, dass** sie einen Speicher (M) aufweist, der eine Einheit von Merkmalen des Geräuschpegels des Fahrzeuginnenraums (14) abhängig von den Parametern der Anlage zusammenfasst.

24. Anlage nach Anspruch 23, **dadurch gekennzeichnet, dass** der Speicher M abhängig vom Fahrzeug (10) und/oder den möglichen Betriebsarten der Anlage (12) parametriert und/oder benutzerangepasst wird.

**Claims**

1. Method for adjusting the acoustic comfort of an apparatus (12), in particular an apparatus for heating, ventilating and/or air-conditioning a motor-vehicle (10), method **characterized in that**

   - a loudness SZp and a degree of interference SInt of the background noise of the sound level of a passenger compartment (14) in which the apparatus (12) is at least partially arranged are determined, said loudness SZp being dependent on an acoustic pressure of said apparatus (12) and said degree of interference SInt of the background noise of the sound level of a passenger compartment (14) corresponding to the measurement of how difficult it is to perceive a sound in a background noise, and
   - an acoustic preference factor Pfa is determined depending on the loudness SZp and on the degree of interference SInt of the background noise of the passenger compartment (14)

   and **in that** the acoustic preference factor Pfa is a linear function of the loudness SZp and of the degree of interference SInt of the background noise of the sound level of the passenger compartment (14) and **in that** the acoustic preference factor Pfa, the loudness SZp and the degree of interference SInt of the background noise are related by coefficients Aa, Ba and Ca, according to the relationship:

   $$Pfa = Aa \times SZp + Ba \times SInt + Ca,$$

   Aa, Ba and Ca being acoustic coefficients comprised between -20 and +20
   and **in that**, depending on the acoustic preference factor Pfa, means (22) for controlling specific components (16, 18, 20, 21ext, 21int) of the apparatus (12) are controlled in order to achieve the desired acoustic comfort.

2. Method according to Claim 1, **characterized in that** the loudness SZp and the degree of interference SInt of the background noise of the sound level of the passenger compartment (14) are measured.

3. Method according to Claim 1, **characterized in that** the loudness SZp and the degree of interference SInt of the background noise of the sound level of the passenger compartment (14) are determined from a set of characteristic data of the sound level of the passenger compartment (14), which is stored in a memory (M).

4. Method according to Claim 3, **characterized in that** the memory (M) allows the acoustic preference Pfa to be determined depending on the loudness SZp and the degree of interference SInt of the background noise of the passenger compartment (14).

5. Method according to one of the preceding claims, **characterized in that** the coefficients are constants.

6. Method according to one of Claims 1 to 5, **characterized in that** the coefficients are variables dependent on parameters of the apparatus.

7. Method according to any one of Claims 1 to 6, **characterized in that** the acoustic preference factor Pfa is modified depending on the acoustic pressure of the sound level of the apparatus.

8. Method according to any one of Claims 1 to 6, **characterized in that** the acoustic preference factor Pfa is modified depending on the frequency of the sound level of the apparatus.

9. Method according to the preceding claim, **characterized in that** the acoustic preference factor Pfa is modified via a band-reject filter (F).

10. Method according to the preceding claim, **characterized in that** the band-reject filter (F) has a frequency of application comprised between 100 Hz and 1000 Hz.

11. Method according to Claim 9 or 10, **characterized in that** the band-reject filter (F) has a bandwidth comprised between 1000 Hz and 2000 Hz.

12. Method according to Claim 9, **characterized in that** the band-reject filter (F) has a frequency of application equal to 250 Hz and a bandwidth equal to 1500 Hz.

13. Method according to any one of the preceding claims, **characterized in that** the acoustic preference factor Pfa is comprised between 0.75 and 1.

14. Method according to any one of the preceding claims, **characterized in that** a thermal preference factor Pft of the passenger compartment (14) is determined.

15. Method according to Claim 11, **characterized in that** the acoustic preference factor Pfa and the thermal preference factor Pft define an overall preference factor Pfg and **in that** the acoustic preference factor Pfa, thermal preference factor Pft and overall preference factor Pfg are related by coefficients At, Bt and Ct according to the relationship:

$$Pfg = At \times Pfa + Bt \times Pft + Ct.$$

16. Method according to Claim 15, **characterized in that** the coefficients are comprised between -3 and +3.

17. Apparatus, in particular for heating, ventilating and/or air-conditioning a motor-vehicle, comprising an algorithm for controlling specific components (16, 18, 20, 21ext, 21int) and means (22) for controlling the specific components (16, 18, 20, 21ext, 21int) and in that the control means (22) are controlled by the control algorithm (26), which implements the method for adjusting acoustic comfort according to any one of the claims, the acoustic preference factor Pfa being an input parameter of the algorithm (26) for controlling the control means (22) .

18. Apparatus according to Claim 17, **characterized in that** it furthermore comprises switching means (28) suitable for triggering the method for adjusting acoustic comfort.

19. Apparatus according to Claim 18, **characterized in that** the switching means (28) are automatically actuated.

20. Apparatus according to Claim 18, **characterized in that** the switching means (28) are manually actuated.

21. Apparatus according to any one of Claims 17 to 20, **characterized in that** the algorithm (26) for controlling the control means (22) comprises outputs for parameters of the apparatus chosen among the speed of rotation of a blower (16), the configuration of a distribution of air (20) to the passenger compartment (14) the configuration of an air inlet (21ext, 21int) and the speed of rotation of a compressor (18).

22. Apparatus according to any one of Claims 17 to 21, **characterized in that** it comprises at least one microphone (24) for measuring the sound level of the passenger compartment (14).

23. Apparatus according to any one of Claims 17 to 21, **characterized in that** it comprises a memory (M) in which a set of characteristics of the sound level of the passenger compartment (14) as a function of parameters of the apparatus is stored.

24. Apparatus according to Claim 23, **characterized in that** the memory M is parameterized and/or personalized depending on the vehicle (10) and/or on possible modes of use of the apparatus (12).

# FIG.1

# FIG.2

FIG.3

FIG.4

FIG.5

FIG.6

## RÉFÉRENCES CITÉES DANS LA DESCRIPTION

**Documents brevets cités dans la description**

- DE 19944735